# EUROPÄISCHE PATENTSCHRIFT

(11) **EP 0 714 147 B1**
(45) Veröffentlichungstag und Bekanntmachung des Hinweises auf die Patenterteilung: **03.05.2000**
(21) Anmeldenummer: 94810667.9
(22) Anmeldetag: 23.11.1994
(51) Int. Cl.: H01M 8/02, H01M 8/24

(54) **Hochtemperatur-Brennstoffzelle mit chromhaltigen Verbindungselementen zwischen elektrochemisch aktiven Platten**
High-temperature fuel cell with chromium-containing connecting elements between the electrochemical active plates
Pile à combustible fonctionnant à haute température avec des éléments de connexion contenant du chrome entre des plaques électrochimiquement actives

(43) Veröffentlichungstag der Anmeldung: 29.05.1996
(73) Patentinhaber: Sulzer Hexis AG, 8400 Winterthur (CH)
(72) Erfinder: Batawi, Dr. Emad, CH-8409 Winterthur (CH)
(74) Vertreter: Heubeck, Bernhard

(56) Entgegenhaltungen:
- EP-A- 0 338 823
- EP-A- 0 410 166
- EP-A- 0 423 448
- EP-A- 0 615 298
- PATENT ABSTRACTS OF JAPAN vol. 015 no. 118 (E-1048) ,22.März 1991 & JP-A-03 008264 (SANYO ELECTRIC CO LTD) 16.Januar 1991,
- CHEMICAL ABSTRACTS, vol. 117, no. 16, 19.Oktober 1992 Columbus, Ohio, US; abstract no. 154554e, IWATA TOMOO 'Solid-electrolyte fuel cells' & JP-A-04 138 670 (FUJII ELECTRIC CO) 13.Mai 1992
- PATENT ABSTRACTS OF JAPAN vol. 018 no. 527 (E-1613) ,5.Oktober 1994 & JP-A-06 188003 (SANYO ELECTRIC CO LTD) 8.Juli 1994,
- SOLID STATE IONICS, Bd. 52,Nr. 1/3, Mai 1992 AMSTERDAM NL, Seite 69-75 PER KOFSTAD 'High temperature corrosion in SOFC environments'
- PATENT ABSTRACTS OF JAPAN vol. 017 no. 319 (E-1383) ,17.Juni 1993 & JP-A-05 036425 (TOKYO ELECTRIC POWER CO INC:THE) 12.Februar 1993,

## Beschreibung

Die Erfindung bezieht sich auf eine Verwendung einer Deckschicht als Abdeckung auf einem chromhaltigen Verbindungselement in einer Hochtemperatur-Brennstoffzelle.

Aus der EP-A 0 338 823 und der JP-A 4138670 sind chromhaltige Interkonnektoren (Verbindungselemente) bekannt, die beschichtet sind. Zweck der Beschichtung ist, metallisches Chrom vor einer Oxidation zu schützen. Aus den EP-A 0 410 166 und EP-A 0 423 448 sind Verbindungselemente bekannt, deren Oberflächen mit Edelmetallen beschichtet sind und bei denen eine zusätzliche Schicht zwischen einem Grundkörper und der Edelmetallbeschichtung als Diffusionssperre vorgesehen ist.

Die Erfindung geht von einer Brennstoffzelle aus, die aus der EP-A 0 551 054 bekannt ist: Es hat sich als vorteilhaft erwiesen, beiderseits der elektrochemisch aktiven Platte - dem sogenannten PEN - jeweils einen metallischen Interkonnektor anzuordnen, der mit noppenartigen Elementen eine elektrische Verbindung zu der Elektrode des PEN herstellt. Diese Interkonnektoren haben eine dreifache Funktion, nämlich als Stromsammler, Temperaturausgleichsmittel und Wärmetauscherelement für die eingespeiste Luft. Wegen der hohen Betriebstemperatur und wegen der Ausbildung von Metalloxiden an der Oberfläche der Interkonnektoren müssen Legierungen verwendet werden, die mindestens aus rund 25 % Chrom bestehen und die eine Chromoxid-Schutzschicht bilden. Die Verwendung von Aluminiden, die auch bei erhöhten Temperaturen einsetzbar wären, kommen nicht in Frage. Denn Aluminiumoxid ist im Gegensatz zu Chromoxid elektrisch nicht leitend.

Wie sich herausgestellt hat, erleiden die elektrochemisch aktiven Platten in Anwesenheit von chromhaltigen Legierungen allmählich eine Leistungseinbusse. Der Abbau des Wirkungsgrades ist darauf zurückzuführen, dass bei den Betriebstemperaturen Chromoxid in die Gasphase übergeht, aus der sich das Chromoxid auf die Elektroden des PEN niederschlägt.

Es ist Aufgabe der Erfindung, Mittel zu schaffen, durch die der Transport von Chromoxid von den Interkonnektoren zu den PEN-Elektroden unterbunden wird. Diese Aufgabe wird mittels einer Verwendung einer Deckschicht gemäss Anspruch 1 oder 2 gelöst. Aufgrund dieser Verwendung einer besonderen Deckschicht führt die Luft nur wenig gasförmiges Chromoxid mit sich. Allfällige Ablagerungen von Chromoxid auf den Elektroden werden von den PEN-Oberflächen desorbiert und von der chromoxidarmen Luft aus dem System wegtransportiert. Dank der niedrigen Chromoxidkonzentration in der Luft kommt es erst gar nicht zu schädlichen Chromoxidablagerungen.

Der unabhängige Anspruch 3 bezieht sich auf eine analoge Verwendung einer Deckschicht in einer Batterie mit Brennstoffzellen, bei welcher auch für eine ausserhalb der Zellen angeordnete Wärmetauscherwand die erfindungsgemässe Massnahme, nämlich das Anbringen einer der genannten Chromoxid-Barrieren, vorgesehen ist.

Nachfolgend wird die Erfindung anhand der Zeichnungen erläutert. Es zeigen:
- Fig. 1: eine aufgebrochene Brennstoffzelle,
- Fig. 2: einen Querschnitt durch die Brennstoffzelle,
- Fig. 3: ausschnittsweise einen Interkonnektor der Brennstoffzelle mit PEN,
- Fig. 4: einen Querschnitt durch eine Kontaktstelle zwischen PEN und Interkonnektor für eine bekannte Brennstoffzelle,
- Fig. 5: einen Querschnitt wie in Fig.4 für eine erfindungsgemässe Brennstoffzelle und
- Fig.6: einen Ausschnitt eines Stapels von Brennstoffzellen.

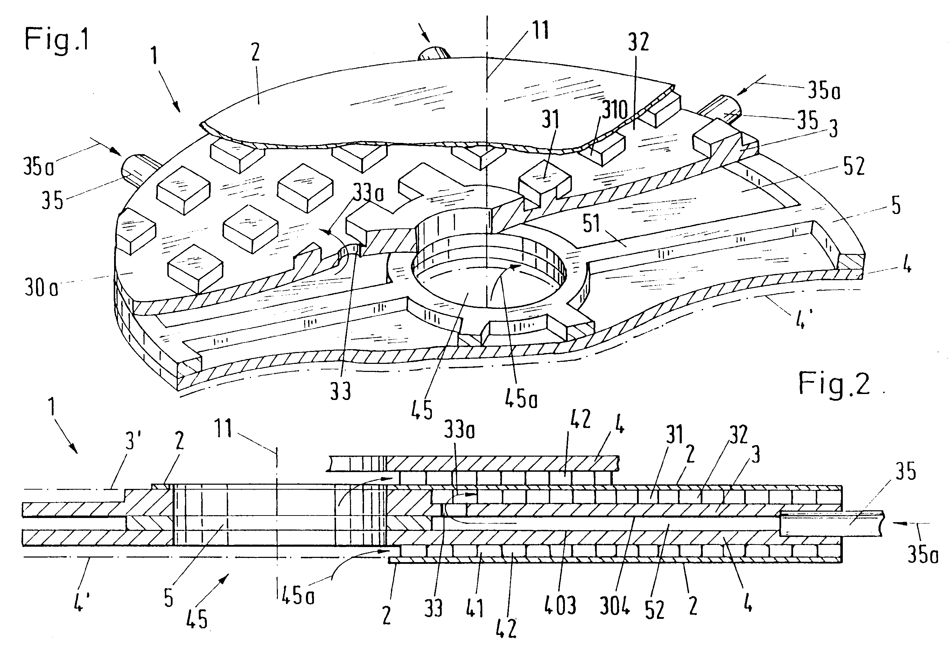

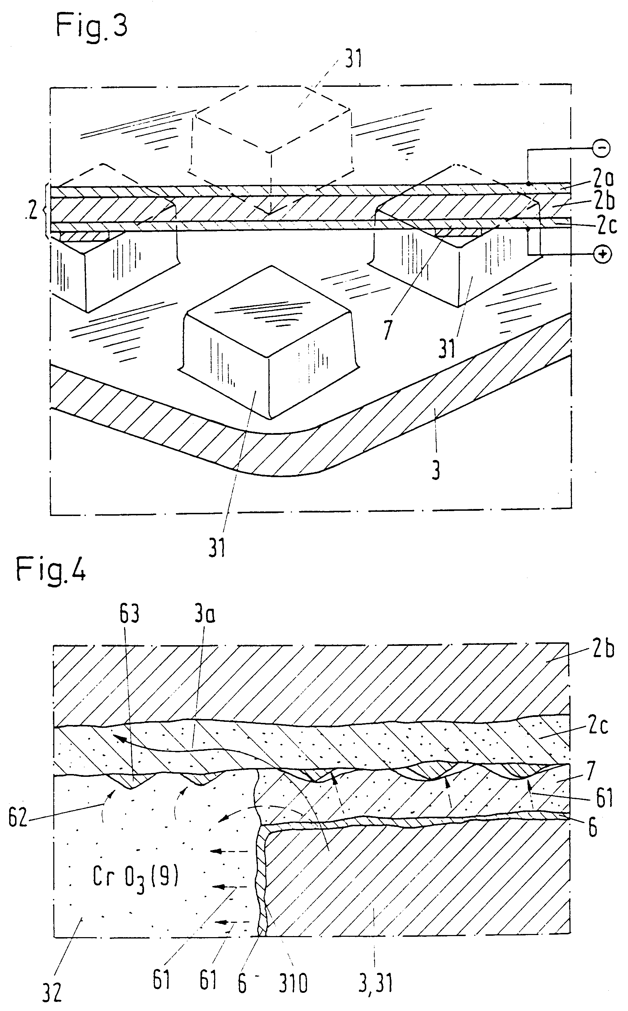

In den Figuren 1 und 2 ist eine Brennstoffzelle 1 mit folgenden Komponenten gezeigt: eine elektrochemisch aktive Platte oder PEN 2, die sich aus der Luftelektrode oder Kathode 2c (siehe Fig. 3), der Gaselektrode oder Anode 2a und dem Feststoffelektrolyten 2b aufbaut; ein luftseitiger Interkonnektor 3; ein gasseitiger Interkonnektor 4; und ein Zwischenstück 5.

Über Rohre 35 wird Luft (Pfeil 35a) in sektorförmige Kammern 52 zwischen den Interkonnektoren 3 und 4 eingespeist. Benachbarte Kammern 52 sind durch radiale Stege 51 des Zwischenstücks 5 getrennt. In diesen Kammern 52 erfolgt eine Erwärmung der Luft auf praktisch Betriebstemperatur. Durch eine Öffnung 33 im Mittenbereich der Brennstoffzelle 1 strömt die Luft (Pfeil 33a) in den Raum 32 zwischen dem PEN 2 und dem Interkonnektor 2, der über die noppenartigen Elemente 31 mit dem PEN 2 in Verbindung steht. Erfindungsgemäss sind die freien Oberflächen 30a und 310 von einer Schicht überzogen, die als Barriere für Chromoxid wirkt. Auch die inneren Oberflächen 304 und 403 (siehe Fig. 2) der Kammern 52 sind in gleicher Art beschichtet.

Der gasseitige Interkonnektor 4 ist gleich ausgebildet wie der luftseitige 2; in Fig.1 ist strichpunktiert die Ebene 4' dargestellt, in der noppenartige Elemente 41 (siehe Fig.2) mit der Gaselektrode des PEN 2 einer benachbarten Zelle verbunden sind. Die entsprechende Ebene für die Luftseite hat das Bezugszeichen 3'.

Die Brennstoffzelle 1 bildet das sich wiederholende Element eines Stapels, der bezüglich einer Achse 11 zentralsymmetrisch ausgebildet ist. Über einen zentralen Kanal 45 wird der gasförmige Brennstoff, kurz das Gas 5 (Pfeil 45a), in die Räume 42 zwischen PEN 2 und Interkonnektor 4 zugeführt.

Die Detaildarstellung in Fig.3 zeigt einen Teil des dreischichtigen PEN 2, mit der Anode 2a, dem Feststoffelektrolyten 2b und der Kathode 2c. Der Interkonnektor 3 ist (durch eine Schicht 7 mit dem PEN 2 verbunden. Die Schicht 7 ist porös; sie ist aus einer Aufschlämmung eines geeigneten pulverförmigen Stoffs hergestellt. Solche Stoffe sind aus der EP-A 0 556 532 bekannt.

Die Verbindungsschicht 7 ist in Fig.4 zusammen mit benachbarten Schichten als Querschnitt für eine bekannte Brennstoffzelle dargestellt. Eine dünne Schicht 6 aus Chromoxid Cr2O3, überzieht den Interkonnektor 3. Bei den Betriebstemperaturen der Hochtemperatur-Brennstoffzelle wird gasförmiges Chromoxid CrO3 von der Schicht 6 in den Luftraum 32 freigesetzt (Pfeile 61). Bei hohen Konzentrationen des CrO3 im Raum 32 lagert sich das Chromoxid teilweise auf der Kathode 2c in Form von Cr2O3 ab (Pfeile 62). Solche Ablagerungen 63 beeinträchtigen die stromliefernden Kathodenreaktionen. Mit dem Pfeil 3a ist der Elektronentransport angedeutet.

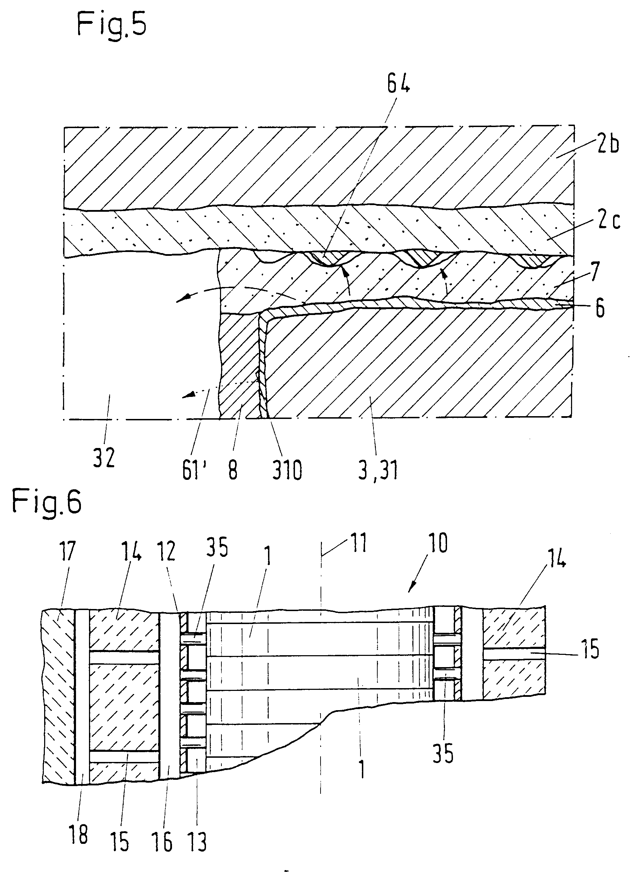

Wird - wie in Fig.5 gezeigt - die Oberfläche des Interkonnektors 3 gemäss der Erfindung mit einer Chromoxid-Barriere 8 beschichtet, so ergeben sich nur noch Chromoxid-Ablagerungen 64 in den Porenräumen zwischen der Verbindungsschicht 7 und der Kathode 2c. Der Wirkungsgrad der elektrochemisch aktiven Platte 2 ist nicht mehr beeinträchtig. Die Chromoxid-Barriere 8 kann eine gewisse Durchlässigkeit für Chromoxid aufweisen 5 (Pfeil 61'); denn das freigesetzte Chromoxid wird von der Luft im Raum 32 aufgenommen und wegtransportiert.

Aus der EP-A 0 580 918 ist eine Brennstoffzellen-Batterie mit einer wärmedämmenden Hülle bekannt; eine derartige Vorrichtung ist in Fig.6 ausschnittsweise dargestellt. Im Ringspalt zwischen dem Stapel. 10 mit den Zellen 1 und einer zylindrischen Wand 12 ist ein Verbrennungsraum 13 angeordnet, wo das nicht vollständig verbrauchte Gas nachverbrannt wird. Die Luft gelangt unter Wärmeaufnahme durch ein Kanalsystem 18, 15 der wärmedämmenden Hülle 17, 14 in den ringspaltförmigen Raum 16, wo sie an der Wand 12 weiter aufgeheizt wird, bevor sie über die Rohre 35 in die einzelnen Brennstoffzellen eintritt. Damit die Luft nicht Chromoxide von der Wand 12 aufnimmt, ist auch diese Wand 12 mit einer Chromoxid-Barriere beschichtet.

Als Material für die Chromoxid-Barrieren kommen keramische Stoffe oder Silikatgläser in Frage. Diese Stoffe werden nach bekannten Methoden als aufgeschlämmte Pulver ("Slurry") auf die abzudeckenden Oberflächen aufgetragen. Nach dem Trocknen werden die aufgetragenen Schichten mittels Wärmebehandlung durch Versintern oder Schmelzen zu einer dichten Deckschicht umgeformt.

Geeignete keramische Stoffe sind Perowskite, insbesondere Magnetit (La,Sr)MnO₃, Chromit (La,Sr)CrO₃ oder Kobaltit (La,Sr)CoO₃. Einer Menge von 100g Perowskit-Pulver werden rund 50g organische Stoffe zugemischt, die sich beim Trocknen und Sintern der aufgetragenen Schicht wieder verflüchtigen. Die organischen Stoffe bestehen neben Bindemitteln (z.B. Ethyl-Zellulose) und Zusatzstoffen hauptsächlich - zu rund 35 g - aus einem Lösungsmittel (z.B. DEGBEA: Diethylen-Glycol-Monobutyl-Ether-Acetat). Zusatzstoffe sind beispielsweise Entflockungsmittel (z.B. "Beycostat") und/oder Stoffe, mit denen sich die rheologischen Eigenschaften der Aufschlämmung beeinflussen lassen (z.B. Furan-2-Carboxyl-Säure). Details zum Problemkreis der keramischen Aufschlämmungen findet man in einer Druckschrift von J.S.Reed, Introduction to the Principles of Ceramic Processing, J.Wiley, N.Y., 1987.

Anstelle von keramischen Pulvern lassen sich metallische Pulver verwenden, denen mit Vorteil Carbonate beigemengt sind. Bei der Wärmebehandlung werden die Metalle oxidiert und dadurch in eine keramische Phase umgewandelt.

Die Emailschichten werden aus einem Glaspulver (Partikelgrösse rund 0.5µm) hergestellt, das beispielsweise in Terpineol aufgeschlämmt ist, wobei mit Vorteil - wie beim keramischen Material - diesem Lösungsmittel ein Entflockungsmittel beigemischt ist. Für das Glas kommen Zusammensetzungen in Frage, wie sie durch folgende Aufstellung gegeben sind: SiO₂ (40-60), Al₂O₃ und/oder Y₂O₃ (0-10), CaO (0-10), Na₂O (0-15), MnO (10-25), CoO (0-10), wobei die Ausdrücke in den Klammern Gewichtsprozent-Bereiche bedeuten.

Es sind auch andere Beschichtungsverfahren möglich: Galvanische Abscheidung, Beschichtung durch Aufdampfen/Sputtern oder thermische Spritzverfahren.

## Patentansprüche

1. Verwendung einer Deckschicht (8) als Abdeckung auf einem chromhaltigen Verbindungselement (3) in einer Hochtemperatur-Brennstoffzelle (1), wobei das Verbindungselement für eine elektrisch leitende Verbindung von der Kathode (2c) einer elektrochemisch aktiven Platte (2) zu der Anode (2a) einer entsprechenden Platte (2) in einer benachbarten Zelle (1) vorgesehen ist, das Verbindungselement als Wärmetauscher zur Erhitzung von Luft (35a, 33a) für Kathodenreaktionen ausgebildet ist und die Oberfläche des Verbindungselementes Chromoxid als Schutzschicht gegen eine Oxidation aufweist, wobei die Deckschicht (8) freiliegende Oberflächen des Verbindungselements, die mit der zu erhitzenden Luft in Kontakt kommen, abdeckt, um bei den Betriebstemperaturen der Brennstoffzelle als Barriere für Chromoxid zu wirken, dadurch gekennzeichnet, dass die Deckschicht (8) zumindest teilweise aus einem Perowskit, insbesondere aus Magnetit (La,Sr)MnO₃, Chromit (La,Sr)CrO₃ oder Kobaltit (La,Sr)CoO₃, besteht.

2. Verwendung einer Deckschicht (8) als Abdeckung auf einem chromhaltigen Verbindungselement (3) in einer Hochtemperatur-Brennstoffzelle (1), wobei das Verbindungselement für eine elektrisch leitende Verbindung von der Kathode (2c) einer elektrochemisch aktiven Platte (2) zu der Anode (2a) einer entsprechenden Platte (2) in einer benachbarten Zelle (1) vorgesehen ist, das Verbindungselement als Wärmetauscher zur Erhitzung von Luft (35a, 33a) für Kathodenreaktionen ausgebildet ist und die Oberfläche des Verbindungselement Chromoxid als Schutzschicht gegen eine Oxidation aufweist, wobei die Deckschicht (8) freiliegende Oberflächen des Verbindungselements, die mit der zu erhitzenden Luft in Kontakt kommen, abdeckt, um bei den Betriebstemperaturen der Brennstoffzelle als Barriere für Chromoxid zu wirken, dadurch gekennzeichnet, dass die Deckschicht (8) zumindest teilweise aus einem Email besteht, das sich aus folgenden Stoffen zusammensetzt, wobei in Klammern Bereiche für mögliche Gewichtsprozente angegeben sind:
SiO₂ (40-60), Al₂O₃ und/oder Y₂O₃ (0-10), CaO (0-10), Na₂O (0-15), MnO (10-25), CoO (0-10).

3. Verwendung einer Deckschicht als Chromoxid-Barriere in einer Batterie mit einem zylindrischen Stapel von Brennstoffzellen (1) und einem Nachverbrennungsraum (13), wobei in jeder Zelle (1) ein Verbindungselement für eine elektrisch leitende Verbindung von der Kathode (2c) einer elektrochemisch aktiven Platte (2) zu der Anode (2a) einer entsprechenden Platte (2) in einer benachbarten Zelle (1) vorgesehen ist, das Verbindungselement als Wärmetauscher zur Erhitzung von Luft (35a, 33a) für Kathodenreaktionen ausgebildet ist und die Oberfläche des Verbindungselements Chromoxid als Schutzschicht gegen eine Oxidation aufweist, wobei ferner der Nachverbrennungsraum an der seitlichen Oberfläche des Zellenstapels angeordnet ist und eine Wärmetauscherwand (12) des Nachverbrennungsraums, die zum Aufheizen von Luft für die Kathodenreaktionen vorgesehen ist, zumindest teilweise mit einem Perowskit gemäss Anspruch 1 oder einem Email gemäss Anspruch 2 beschichtet ist.

## Claims

1. Use of a cover layer (8) as a cover on a chromium containing connection element (3) in a high-temperature fuel cell (1), wherein the connection element is provided for an electrically conductive connection from the cathode (2c) of an electrochemically active plate (2) to the anode (2a) of a corresponding plate (2) in a neighbouring cell (1), the connection element is formed as a heat exchanger for the heating of air (35a, 33a) for cathode reactions, and the surface of the connection element has chromium oxide as a protective layer against an oxidation, wherein the cover layer (8) covers over exposed surfaces of the connection element which come into contact with the air to be heated in order to act as a barrier for chromium oxide at the operating temperatures of the fuel cell, characterized in that the cover layer (8) consists at least partly of a perovskite, in particular of magnetite (La, Sr)MnO₃, chromite (La, Sr)SrO₃ or cobaltite (La, Sr)CoO₃.

2. Use of a cover layer (8) as a cover on a chromium containing connection element (3) in a high-temperature fuel cell (1), wherein the connection element is provided for an electrically conductive connection from the cathode (2c) of an electrochemically active plate (2) to the anode (2a) of a corresponding plate (2) in a neighbouring cell (1), the connection element is formed as a heat exchanger for the heating of air (35a, 33a) for cathode reactions, and the surface of the connection element has chromium oxide as a protective layer against an oxidation, wherein the cover layer (8) covers over exposed surfaces of the connection element which come into contact with the air to be heated in order to act as a barrier for chromium oxide at the operating temperatures of the fuel cell, characterized in that the cover layer (8) consists at least partly of an enamel which is composed of the following substances, with ranges for possible percentages by weight being set forth in brackets: SiO₂ (40-60), Al₂O₃ and/or Y₂O₃ (0-10), CaO (0-10), Na₂O (0-15), MnO (10-25), CoO (0-10).

3. Use of a cover layer as chromium oxide barrier in a battery with a cylindrical stack of fuel cells (1) and an afterburning space (13), wherein a connection element is provided in each cell for an electrically conductive connection from the cathode (2c) of an electrochemically active plate (2) to the anode (2a) of a corresponding plate (2) in a neighbouring cell (1), the connection element is formed as a heat exchanger for the heating of air (35a, 33a) for cathode reactions and the surface of the connection element has chromium oxide as a protective layer against an oxidation, wherein furthermore the afterburning space is arranged at the side surface of the cell stack and a heat exchanger wall (12) of the afterburning space, which is provided for the heating up of air for the cathode reactions, is coated at least partly with a perovskite in accordance with claim 1 or an enamel in accordance with claim 2.

## Revendications

1. Utilisation d'une couche de protection (8) comme recouvrement d'un élément de liaison (3) contenant du chrome dans une pile à combustible à haute température (1), où l'élément de liaison est prévu pour une liaison électriquement conductrice de la cathode (2c) d'une plaque électrochimiquement active (2) à l'anode (2a) d'une plaque correspondante (2) dans une pile avoisinante (1), l'élément de liaison est réalisé comme échangeur de chaleur pour chauffer l'air (35a,33a) pour les réactions de cathode et la surface de l'élément de liaison présente de l'oxyde de chrome comme couche de protection contre une oxydation, où la couche de protection (8) recouvre des surfaces dégagées de l'élément de liaison qui viennent en contact avec l'air à chauffer pour agir aux températures de fonctionnement de la pile à combustible comme barrière pour l'oxyde de chrome, caractérisée en ce que la couche de protection (8) est constituée au moins partiellement d'une pérovskite, notamment de magnétite (La,Sr)MnO₃, chromite (La,Sr)CrO₃ ou kobaltite (La,Sr)CoO₃.

2. Utilisation d'une couche de protection (8) comme recouvrement sur un élément de liaison (3) contenant du chrome dans une pile à combustible à haute température (1), où l'élément de liaison est prévu pour une liaison électriquement conductrice de la cathode (2c) d'une plaque électrochimiquement active (2) à l'anode (2a) d'une plaque correspondante (2) dans une pile avoisinante (1), l'élément de liaison est réalisé comme échangeur de chaleur pour le chauffage de l'air (35a,33a) pour des réactions de cathode et la surface de l'élément de liaison présente de l'oxyde de chrome comme couche de protection contre une oxydation, où la couche de protection (8) recouvre des surfaces dégagées de l'élément de liaison qui viennent en contact avec l'air à chauffer pour agir aux températures de fonctionnement de la pile à combustible comme barrière pour l'oxyde de chrome, caractérisée en ce que la couche de protection (8) est constituée au moins partiellement d'un émail constitué des matières suivantes, où sont indiqués entre parenthèses des plages de pour cent en poids possible:
SiO₂ (40-60), Al₂O₃ et/ou Y₂O₃ (0-10), CaO (0-10), Na₂O (0-15), MnO (10-25), CoO (0-10).

3. Utilisation d'une couche de protection comme barrière pour l'oxyde de chrome dans une pile comportant un empilage cylindrique de piles à combustible (1) et une enceinte de post-combustion (13), où est prévu dans chaque pile (1) un élément de liaison pour une liaison électriquement conductrice de la cathode (2c) d'une plaque électrochimiquement active (2) à l'anode (2a) d'une plaque correspondante (2) dans une pile avoisinante (1), l'élément de liaison est réalisé comme échangeur de chaleur pour le chauffage de l'air (35a,33a) pour des réactions de cathode et la surface de l'élément de liaison présente de l'oxyde de chrome comme couche de protection contre une oxydation, où en outre l'enceinte de post-combustion est disposée à la surface latérale de l'empilage des piles et qu'une paroi d'échangeur de chaleur (12) de l'enceinte de post-combustion qui est prévue pour le chauffage de l'air pour les réactions de cathode, est recouverte au moins partiellement d'une pérovskite selon la revendication 1 ou d'un émail selon la revendication 2.
